# EUROPÄISCHE PATENTSCHRIFT

(11) **EP 1 180 506 B1**
(45) Veröffentlichungstag und Bekanntmachung des Hinweises auf die Patenterteilung: **24.09.2003**
(21) Anmeldenummer: 01116802.8
(22) Anmeldetag: 10.07.2001
(51) Int. Cl.: C04B 41/51, C04B 41/00, C23C 24/10, C03B 5/43

(54) **Verfahren zur Herstellung einer Beschichtung auf einem feuerfesten Bauteil**
Process for coating refractory material
Procédé d'application d'un revêtment sur un élément réfractaire

(30) Priorität: 15.08.2000 DE 10040591
(43) Veröffentlichungstag der Anmeldung: 20.02.2002
(73) Patentinhaber: W.C. Heraeus GmbH & Co. KG, 63450 Hanau (DE)
(72) Erfinder: Kock, Wulf, Dr., 63755 Alzenau (DE); Krüger, Frank, Dr., 61200 Wölfersheim (DE); Lupton, David Francis, Dr., 63571 Gelnhausen (DE); Manhardt, Harald, 63486 Bruchköbel (DE); Merker, Jürgen, Dr., 07768 Kahla (DE)
(74) Vertreter: Kühn, Hans-Christian

(56) Entgegenhaltungen:
- EP-A- 0 559 330
- EP-A- 0 679 733
- DE-C- 19 651 851
- US-A- 5 385 595

## Beschreibung

Die Erfindung betrifft ein Verfahren zur Herstellung einer Beschichtung auf einem feuerfesten Bauteil, wobei als ein Beschichtungsmaterial eine Edelmetall-Legierung auf das feuerfeste Bauteil aufgebracht wird, wobei das Edelmetall der Edelmetall-Legierung eine Schmelztemperatur größer 1400°C aufweist und aus Platin und/oder Iridium und/oder Rhodium und/oder Ruthenium und/oder Gold gebildet wird, wobei die Edelmetall-Legierung als Pulver verwendet wird und das feuerfeste Bauteil mit dem Pulver beschichtet wird.

Bauteile, die zur Herstellung von Glas und insbesondere im Bereich der Glasschmelzwannen und Feeder verwendet werden, sind hohen Temperaturen in Verbindung mit aggressiven Atmosphären ausgesetzt. Ein besonders hoher korrosiver Angriff findet beispielsweise an der Drei-Phasen-Grenze zwischen der Glasschmelze, der Gasatmosphäre über der Schmelze und dem Feuerfestmaterial statt, der zu einer massiven Auswaschung des Feuerfestmaterials in Höhe der Oberfläche des Glasbades führt. Abgetragenes Feuerfestmaterial verunreinigt die Glasschmelze und mindert deren Qualität. Um eine hohe Qualität des Glases zu gewährleisten und die Lebensdauer solcher Bauteile zu verlängern, sind Beschichtungen oder Aus- beziehungsweise Verkleidungen mit Edelmetall üblich.
Derartiges beschreibt die Druckschrift EP 0 559 330 A1 unter anderem für den Einsatz in Glaswannen. Hier schützt eine nicht-poröse Beschichtung aus Edelmetall oder Edelmetall-Legierung ein keramisches Substrat vor korrosivem Angriff durch eine Glasschmelze und die aggressive Atmosphäre oberhalb der Schmelze. Die nicht-poröse Beschichtung wird durch Flammspritzen auf das Substrat aufgebracht und anschließend durch eine mechanische oder thermische Behandlung verdichtet. Die thermischen Ausdehnungskoeffizienten des Substrates und der nicht-porösen Beschichtung sind aufeinander abgestimmt, um eine Ablösung der Beschichtung vom Substrat zu verhindern.
Die Druckschriften EP 0 471 505 B1 und EP 0 679 733 A2 beschreiben Bauteile aus metallischen Substraten und einer Beschichtung, die aus mehreren metallischen und keramischen Schichten aufgebaut ist. Die letzte der Schichten ist aus einem Edelmetall oder einer Edelmetall-Legierung gebildet und nicht-porös. Dabei wird die letzte Schicht vorzugsweise durch thermisches Spritzen, galvanisch oder in Form eines Pulvers aufgebracht und mechanisch und/oder thermisch nachverdichtet.
Als nachteilig und kostenintensiv erweist sich bei den beschriebenen Beschichtungen der notwendige Verfahrensschritt, in welchem die für den Kontakt zu Glasschmelze und korrosiver Atmosphäre vorgesehene edelmetallhaltige, letzte Schicht nachträglich verdichtet und ihre offene Porosität verschlossen wird.
Die DE 196 51 851 C1 beschreibt ein Verfahren zur Herstellung von mit Edelmetall, vorzugsweise Platin, beschichteten oxidkeramischen Bauteilen für die Glasindustrie. Eine dichte und festhaftende Schicht wird hier dadurch erzeugt, dass eine Einbrennpaste verwendet wird, die Platinpartikel einer mittleren Ausgangsteilchengröße von ≤ 10µm aufweist. Durch Kaltverformung mit einem Verformungsgrad Φ ≥ 2,5 werden die Partikel in Plättchen umgewandelt und in oxidierender Atmosphäre nach einem kontinuierlichen Temperatur-Zeit-Programm eingebrannt. Dabei werden Schichtdicken von bis zu ca. 100µm in einem Zyklus erreicht. Zwar ist ein Nachverdichten der eingebrannten Schicht hier nicht erforderlich, aber das Kaltverformen der Platinpartikel vor dem Einbrand ist ein ebenso aufwendiger Arbeitsschritt.

Es stellt sich daher die Aufgabe, ein schnelleres und kostengünstigeres Verfahren zur Herstellung von Beschichtungen auf Bauteilen für die Glasindustrie bei vergleichbarer Korrosionsbeständigkeit bereitzustellen.

Die Aufgabe wird für das Verfahren dadurch gelöst, dass
die Edelmetall-Legierung eine Liquidustemperatur T_{L} im Bereich von 900°C bis 1400°C aufweist, dass die Edelmetall-Legierung einen Anteil an Edelmetall im Bereich von ≥ 84 bis ≤ 99,5 Gew.-% und einen Anteil an einer oxidierbaren Substanz im Bereich von ≥ 0,5 bis ≤ 16 Gew.-% aufweist, wobei die oxidierbare Substanz aus Bor und/oder Phosphor und/oder Antimon und/oder Arsen gebildet wird, dass
- das feuerfeste Bauteil und die Beschichtung in einer Sauerstoff-enthaltenden Atmosphäre mindestens einmal auf eine Temperatur T erwärmt werden, die größer oder gleich der Liquidustemperatur T_{L} der Edelmetall-Legierung ist, dass
- die oxidierbare Substanz dabei oxidiert wird und ein entstandenes Oxid zumindest teilweise verdampft wird, und dass
- die Temperatur T so lange gehalten wird, bis der Anteil an oxidierbarer Substanz in der Beschichtung < 0,1 at % beträgt und das beschichtete feuerfeste Bauteil anschließend abgekühlt wird.

Bei dem erfindungsgemäßen Verfahren wird demnach eine Edelmetall-Legierung aus hochschmelzendem Edelmetall und einer als Flussmittel wirkenden oxidierbaren Substanz erschmolzen, wozu eine Temperatur unterhalb der Schmelztemperatur des/der verwendeten Edelmetalle(s) erforderlich ist.
Dabei sind Edelmetall-Legierungen mit Bor beispielsweise aus der DE OS 1 558 902 zum Herstellen von Lötverbindungen zwischen Kohlekörpern und anderen Materialien beziehungsweise aus der USN 7,087,932 ( über Derwent-Datenbankrecherche ) zum Beschichten von Graphit bereits bekannt. Aber auch Edelmetall-Legierungen mit Phosphor sind zur Verbindung von Bauteilen bereits aus der JP 63139072 ( über Derwent-Datenbankrecherche ) bekannt. Weiterhin ist aus der EP 0 209 264 eine amorphe Rhodiumlegierung mit Bor, Phosphor oder Arsen bekannt.

Die oxidierbaren Substanzen führen beim Erschmelzen der Edelmetall-Legierung zu einer vollständigen Benetzung des feuerfesten Bauteils und bewirken die Ausbildung einer dichten Beschichtung mit hoher Haftfestigkeit am Bauteil.
Die oxidierbaren Substanzen in der schmelzflüssigen Edelmetall-Legierung reagieren jedoch beim erfindungsgemäßen Verfahren mit dem Sauerstoff in der Sauerstoff-enthaltenden Atmosphäre zu einem Oxid, das verdampft. Aufgrund dieser Verdampfung sinkt der Gehalt an oxidierbarer Substanz in der Beschichtung ab. Die Zeit für diesen Verdampfungsvorgang kann so gewählt werden, dass die oxidierbare Substanz im wesentlichen entfernt wird. Im vorliegenden Fall wird die Zeit so gewählt, dass eine Beschichtung aus Edelmetall zurückbleibt, die < 0,1 at % an oxidierbarer Substanz enthält. Somit gleicht die Schmelztemperatur der fertigen Beschichtung nahezu der des in der Edelmetall-Legierung verwendeten Edelmetalls.
Demnach kann die Beschichtung vorteilhafterweise bei relativ niedriger Temperatur erzeugt, jedoch bei weit höherer eingesetzt werden.

Besonders bevorzugt wird dabei, wenn das Edelmetall aus ≥ 70 Gew.-% Platin und ≤ 30 Gew.-% Gold und/oder Iridium und/oder Rhodium gebildet wird.

Dabei kann das feuerfeste Bauteil aus einer Keramik oder einem Metall gewählt werden.
Als Keramik wird dabei vorzugsweise Al₂O₃ und/oder SiO₂ und/oder ZrO₂ und/oder Zirkoniumsilikat und/oder Aluminiumsilikat verwendet.
Als Metall kann Molybdän und/oder Eisen und/oder Nickel und/oder Kobalt verwendet werden. Die Oxidationsbeständigkeit dieser Metalle kann noch erhöht werden, wenn das Metall aus Eisen und/oder Nickel und/oder Kobalt und 15 bis 30 Gew.-% Aluminium und/oder Chrom gebildet wird. Die Neigung des Metalls zur Verzunderung kann zudem gesenkt werden, wenn 0,01 bis 0,3 Gew.-% Hafnium und/oder Yttrium und/oder Lanthan und/oder Cer beziehungsweise eine oder mehrere deren oxidischen Verbindungen ( Hafniumoxid, Yttriumoxid, Lanthanoxid, Ceroxid ) enthalten sind. Weiterhin können Niob, Titan oder Silizium enthalten sein.
Das Metall kann vor der Beschichtung mit der Edelmetall-Legierung aber auch mit einer Keramikbeschichtung versehen werden, wobei hier ebenfalls vorzugsweise Al₂O₃ und/oder SiO₂ und/oder ZrO₂ und/oder Zirkoniumsilikat und/oder Aluminiumsilikat verwendet wird. Eine solche Keramikbeschichtung kann durch Bedampfen, Sputtern oder Plasmaspritzen aufgebracht werden.

Besonders haftfeste Beschichtungen werden erzielt, wenn das Pulver aus Edelmetall-Legierung mit einer maximalen Korngröße von 150µm verwendet wird. Idealerweise beträgt die maximale Korngröße 50µm.

Bewährt hat sich außerdem, wenn die Liquidustemperatur T_{L} im Bereich von 1100°C bis 1300°C gewählt wird. In diesem Bereich erfolgt die Verdampfung des Oxids der oxidierbaren Substanz schnell und die notwendigen Temperaturen sind unproblematisch mit Standardöfen erreichbar.

Zur Herstellung der Beschichtung kann das feuerfeste Bauteil mit dem Pulver beschichtet werden, indem das Pulver aufgestäubt oder in Form einer Suspension aufgetragen wird.
Dabei kann das feuerfeste Bauteil durch Eintauchen in die Suspension oder durch Besprühen oder Aufpinseln oder Bedrucken mit der Suspension beschichtet werden. Diese Verfahren sind kostengünstiger als das bereits bekannte thermische Spritzen.

Besonders hat sich die Verwendung einer Edelmetall-Legierung für das Verfahren bewährt, die aus dem Edelmetall Platin und der oxidierbaren Substanz Bor gebildet wird. Dabei ist es von Vorteil, die Edelmetall-Legierung mit Bor in einem Bereich von 0,5 bis 2 Gew.-% auszubilden.

Ebenso hat sich die Verwendung einer Edelmetall-Legierung bewährt, die aus dem Edelmetall Platin und der oxidierbaren Substanz Phosphor gebildet wird. Bevorzugt wird hier die Bildung der Edelmetall-Legierung mit Phosphor in einem Bereich von 2 bis 3,5 Gew.-%.

Aber auch die Verwendung einer Edelmetall-Legierung aus dem Edelmetall Platin und der oxidierbaren Substanz Antimon ist möglich. Die Edelmetall-Legierung wird dabei vorzugsweise mit Antimon in einem Bereich von 8 bis 16 Gew.-% gebildet.
Ebenso ist die Verwendung einer Edelmetall-Legierung aus dem Edelmetall Platin und der oxidierbaren Substanz Arsen möglich. Hier sollte die Edelmetall-Legierung mit Arsen in einem Bereich von 5 bis 10 Gew.-% gebildet werden.

Da es sich bei Antimon und Arsen allerdings um stark toxische Stoffe handelt, wird die Verwendung einer Edelmetall-Legierung mit Bor und/oder Phosphor diesen vorgezogen.

Besonders dicht wird die Beschichtung, wenn das feuerfeste Bauteil und die Beschichtung einmal auf eine Temperatur T₁ erwärmt werden, die größer oder gleich der Liquidustemperatur T_{L} der Edelmetall-Legierung ist, und dass das feuerfeste Bauteil und die Beschichtung noch ein zweites Mal auf eine Temperatur T₂ erwärmt werden, die oberhalb der Temperatur T₁ gewählt wird.
Bevorzugt wird hier die Temperatur T₁ kleiner 1400°C gewählt und die Temperatur T₂ größer 1400°C gewählt.
Die Temperatur T₂ wird bevorzugt so lange gehalten, bis der Anteil an oxidierbarer Substanz in der Beschichtung < 0,01 at %, idealerweise < 0,005 at % beträgt.

Das feuerfeste Bauteil wird vorzugsweise mit dem Pulver aus Edelmetall-Legierung in einer Dicke beschichtet, dass nach dem Erwärmen eine Beschichtung mit einer Schichtdicke von 50 bis 500µm vorliegt.

Das feuerfeste Bauteil kann mit der Beschichtung vollständig oder nur teilweise bedeckt werden. So kann ein Bauteil beispielsweise nur im Bereich der Drei-Phasen-Grenze zwischen der Glasschmelze, der Gasatmosphäre über der Schmelze und dem Feuerfestmaterial beschichtet sein, der einem starken korrosiven Angriff ausgesetzt ist.

Die Sauerstoff-enthaltende Atmosphäre wird vorzugsweise aus Luft oder Sauerstoff gebildet. Selbstverständlich können aber auch andere Sauerstoff-enthaltende Gasgemische eingesetzt werden, wie zum Beispiel Argon-Sauerstoff-Gemische oder Stickstoff-Sauerstoff-Gemische.

Die Beschichtung kann nach dem Abkühlen noch galvanisch beschichtet werden, um die Schichtdicke zu erhöhen oder die Eigenschaften zu verändern.

Folgende Beispiele 1 bis 4 sollen die Erfindung beispielhaft erläutern:
- Bsp. 1: Verfahren unter Verwendung einer Platin-Bor-Legierung ( einmal erhitzt )
- Bsp. 2: Verfahren unter Verwendung einer Platin-Bor-Legierung (zweimal erhitzt )
- Bsp. 3: Verfahren unter Verwendung einer Platin-Rhodium-Bor-Legierung ( zweimal erhitzt )
- Bsp. 4: Verfahren unter Verwendung einer Platin-Phosphor-Legierung ( zweimal erhitzt )

### Beispiel 1:

Es wurde ein Pulver aus einer Platin-Bor-Legierung mit 1,5 Gew.-% Bor und einer maximalen Korngröße < 45µm hergestellt. Das Pulver wurde mit Ethanol zu einer streichfähigen Suspension verarbeitet und auf ein feuerfestes Bauteil aus porösem Korund mit einer Schichtdicke von 100µm mittels eines Pinsels aufgetragen. Das beschichtete Bauteil wurde an Luft auf 1000°C erhitzt und die Temperatur über 12h gehalten. Anschließend wurde das Bauteil samt Beschichtung abgekühlt und der Bor-Gehalt der Beschichtung bestimmt. Der verbliebene Bor-Gehalt lag bei < 0,04 at.-%. Die Haftfestigkeit der Beschichtung am Bauteil war hervorragend. Es wurde ein Korrosionstest der Beschichtung in Kontakt zu einer Glasschmelze der Zusammensetzung 54 Gew.-% SiO₂, 22 Gew.-% CaO, 14 Gew.-% Al₂O₃, 8,5 Gew.-% B₂O₃, 0,5 Gew.-% Na₂O, 0,5 Gew.-% K₂O, 0,5 Gew.-% MgO bei 1250°C über 8h durchgeführt. Es wurden keine Anzeichen von Korrosion festgestellt.

### Beispiel 2:

Es wurde ein Pulver aus einer Platin-Bor-Legierung mit 1,5 Gew.-% Bor und einer maximalen Korngröße < 45µm hergestellt. Das Pulver wurde mit Ethanol zu einer streichfähigen Suspension verarbeitet und auf ein feuerfestes Bauteil aus porösem Korund mit einer Schichtdicke von 100µm mittels eines Pinsels aufgetragen. Das beschichtete Bauteil wurde an Luft auf 1000°C erhitzt und diese Temperatur T₁ über 12h gehalten. Anschließend wurde das Bauteil samt Beschichtung abgekühlt und ein zweites Mal erhitzt, wobei eine Temperatur T₂ von 1600°C über 12h gehalten wurde.
Das Bauteil wurde samt Beschichtung abgekühlt und der Bor-Gehalt der Beschichtung bestimmt. Der verbliebene Bor-Gehalt lag bei < 0,01 at.-%. Die Haftfestigkeit der Beschichtung am Bauteil war hervorragend. Ein Korrosionstest der Beschichtung in Kontakt zu einer extrem niedrigviskosen Bleiglasschmelze ( Zusammensetzung: 80 Gew.-% PbO, 15 Gew.-% SiO₂, 4 Gew.-% K₂O, 0,5 Gew.-% Na₂O, 0,5 Gew.-% As₂O₃) bei 1150°C über 170h zeigte, dass die Beschichtung von der Bleiglasschmelze nicht durchdrungen werden konnte.

### Beispiel 3:

Es wurde ein Pulver aus einer Platin-Rhodium-Bor-Legierung mit 1,5 Gew.-% Bor hergestellt, wobei der Anteil an Edelmetall zu 90 Gew.-% aus Platin und 10 Gew.-% aus Rhodium gebildet wurde. Das Pulver hatte eine maximale Korngröße < 35µm. Das Pulver wurde mit Ethanol zu einer streichfähigen Suspension verarbeitet und auf ein feuerfestes Bauteil aus porösem Korund mit einer Schichtdicke von 150µm mittels eines Pinsels aufgetragen. Das beschichtete Bauteil wurde an Luft auf eine Temperatur T₁ von 1000°C erhitzt und diese über einen Zeitraum von 12h gehalten. Anschließend wurde das Bauteil samt Beschichtung abgekühlt und ein zweites Mal erhitzt, wobei eine Temperatur T₂ von 1600°C über 12h gehalten wurde.
Das Bauteil wurde samt Beschichtung ein zweites Mal abgekühlt und der Bor-Gehalt der Beschichtung bestimmt. Der verbliebene Bor-Gehalt lag bei < 0,01 at.-%. Die Haftfestigkeit der Beschichtung am Bauteil war hervorragend.
Anschließend wurde ein Korrosionstest mit einer Glasschmelze gemäß Beispiel 1 bei 1250°C über 8 Stunden durchgeführt. Es wurden keine Anzeichen von Korrosion festgestellt.

### Beispiel 4:

Ein metallisches Bauteil aus oxiddispersionsverfestigtem Hochtemperatur-Werkstoff auf EisenBasis (Zusammensetzung: 19 Gew.-% Cr, 5,5 Gew.-% Al, 0,5 Gew.-% Ti, 0,5 Gew.-% Y₂O₃, Rest Fe) in Form eines in der Glasindustrie verwendeten Ziehdornes wurde mittels atmosphärischem Plasmaspritzen mit einer 200µm dicken Keramikbeschichtung aus ZrO₂ beschichtet.
Es wurde ein Pulver aus einer Platin-Phosphor-Legierung mit 2,5 Gew.-% Phosphor hergestellt. Das Pulver hatte eine maximale Korngröße < 35µm. Das Pulver wurde mit Ethanol zu einer streichfähigen Suspension verarbeitet und auf die Keramikbeschichtung des Ziehdorns mit einer Schichtdicke von 100µm aufgesprüht. Das beschichtete Bauteil wurde an Luft auf 950°C erhitzt und diese Temperatur T₁ über 12h gehalten. Anschließend wurde das Bauteil samt Beschichtung abgekühlt und ein zweites Mal erhitzt, wobei eine Temperatur T₂ von 1350°C über 12h gehalten wurde.
Das Bauteil wurde samt Beschichtung ein zweites Mal abgekühlt und der Phosphor-Gehalt der Beschichtung bestimmt. Der verbliebene Phosphor-Gehalt lag bei < 0,01 at.-%. Die Haftfestigkeit der Beschichtung am Bauteil war hervorragend.
Anschließend wurde ein Korrosionstest mit einer Glasschmelze gemäß Beispiel 1 bei 1250°C über 8 Stunden durchgeführt. Es wurden keine Anzeichen von Korrosion festgestellt.

## Patentansprüche

1. Verfahren zur Herstellung einer Beschichtung auf einem feuerfesten Bauteil, wobei als ein Beschichtungsmaterial eine Edelmetall-Legierung auf das feuerfeste Bauteil aufgebracht wird, wobei das Edelmetall der Edelmetall-Legierung eine Schmelztemperatur größer 1400°C aufweist und aus Platin und/oder Iridium und/oder Rhodium und/oder Ruthenium und/oder Gold gebildet wird, wobei die Edelmetall-Legierung als Pulver verwendet wird und das feuerfeste Bauteil mit dem Pulver beschichtet wird, **dadurch gekennzeichnet, dass** die Edelmetall-Legierung eine Liquidustemperatur T_{L} im Bereich von 900°C bis 1400°C aufweist, dass die Edelmetall-Legierung einen Anteil an Edelmetall im Bereich von ≥ 84 bis ≤ 99,5 Gew.-% und einen Anteil an einer oxidierbaren Substanz im Bereich von ≥ 0,5 bis ≤ 16 Gew.-% aufweist, wobei die oxidierbare Substanz aus Bor und/oder Phosphor und/oder Antimon und/oder Arsen gebildet wird, dass
- das feuerfeste Bauteil und die Beschichtung in einer Sauerstoff-enthaltenden Atmosphäre mindestens einmal auf eine Temperatur T erwärmt werden, die größer oder gleich der Liquidustemperatur T_{L} der Edelmetall-Legierung ist, dass
- die oxidierbare Substanz dabei oxidiert wird und ein entstandenes Oxid zumindest teilweise verdampft wird, und dass
- die Temperatur T so lange gehalten wird, bis der Anteil an oxidierbarer Substanz in der Beschichtung < 0,1 at % beträgt und das beschichtete feuerfeste Bauteil anschließend abgekühlt wird.

2. Verfahren nach Anspruch 1, **dadurch gekennzeichnet, dass** das Edelmetall aus ≥ 70 Gew.-% Platin und ≤ 30 Gew.-% Gold und/oder Iridium und/oder Rhodium gebildet wird.

3. Verfahren nach einem der Ansprüche 1 bis 2, **dadurch gekennzeichnet, dass** das feuerfeste Bauteil aus einer Keramik oder einem Metall gebildet ist.

4. Verfahren nach Anspruch 3, **dadurch gekennzeichnet, dass** die Keramik aus Al₂O₃ und/oder SiO₂ und/oder ZrO₂ und/oder Zirkoniumsilikat und/oder Aluminiumsilikat gebildet wird.

5. Verfahren nach Anspruch 3, **dadurch gekennzeichnet, dass** das Metall aus Molybdän und/oder Eisen und/oder Nickel und/oder Kobalt gebildet wird.

6. Verfahren nach Anspruch 5, **dadurch gekennzeichnet, dass** das Metall aus Eisen und/oder Nickel und/oder Kobalt und 15 bis 30 Gew.-% Aluminium und/oder Chrom gebildet wird.

7. Verfahren nach Anspruch 6, **dadurch gekennzeichnet, dass** das Metall außerdem 0,01 bis 0,3 Gew.-% Hafnium und/oder Yttrium und/oder Lanthan und/oder Cer oder oxidische Verbindungen dieser enthält.

8. Verfahren nach einem der Ansprüche 5 bis 7, **dadurch gekennzeichnet, dass** das Metall eine Keramikbeschichtung aufweist.

9. Verfahren nach einem der Ansprüche 1 bis 8, **dadurch gekennzeichnet, dass** das Pulver mit einer maximalen Korngröße von 150µm verwendet wird.

10. Verfahren nach Anspruch 9, **dadurch gekennzeichnet, dass** die maximale Korngröße 50µm beträgt.

11. Verfahren nach einem der Ansprüche 1 bis 10, **dadurch gekennzeichnet, dass** die Liquidustemperatur T_{L} im Bereich von 1100°C bis 1300°C gewählt wird.

12. Verfahren nach einem der Ansprüche 1 bis 11, **dadurch gekennzeichnet, dass** das feuerfeste Bauteil mit dem Pulver beschichtet wird, indem das Pulver aufgestäubt oder in Form einer Suspension aufgetragen wird.

13. Verfahren nach Anspruch 12, **dadurch gekennzeichnet, dass** das feuerfeste Bauteil durch Eintauchen in die Suspension oder durch Besprühen oder Aufpinseln oder Bedrucken mit der Suspension beschichtet wird.

14. Verfahren nach einem der Ansprüche 1 bis 13, **dadurch gekennzeichnet, dass** die Edelmetall-Legierung aus dem Edelmetall Platin und der oxidierbaren Substanz Bor gebildet wird.

15. Verfahren nach Anspruch 14, **dadurch gekennzeichnet, dass** die Edelmetall-Legierung mit Bor in einem Bereich von 0,5 bis 2 Gew.-% gebildet wird.

16. Verfahren nach einem der Ansprüche 1 bis 13, **dadurch gekennzeichnet, dass** die Edelmetall-Legierung aus dem Edelmetall Platin und der oxidierbaren Substanz Phosphor gebildet wird.

17. Verfahren nach Anspruch 16, **dadurch gekennzeichnet, dass** die Edelmetall-Legierung mit Phosphor in einem Bereich von 2 bis 3,5 Gew.-% gebildet wird.

18. Verfahren nach einem der Ansprüche 1 bis 13, **dadurch gekennzeichnet, dass** die Edelmetall-Legierung aus dem Edelmetall Platin und der oxidierbaren Substanz Antimon gebildet wird.

19. Verfahren nach Anspruch 18, **dadurch gekennzeichnet, dass** die Edelmetall-Legierung mit Antimon in einem Bereich von 8 bis 16 Gew.-% gebildet wird.

20. Verfahren nach einem der Ansprüche 1 bis 13, **dadurch gekennzeichnet, dass** die Edelmetall-Legierung aus dem Edelmetall Platin und der oxidierbaren Substanz Arsen gebildet wird.

21. Verfahren nach Anspruch 20, **dadurch gekennzeichnet, dass** die Edelmetall-Legierung mit Arsen in einem Bereich von 5 bis 10 Gew.-% gebildet wird.

22. Verfahren nach einem der Ansprüche 1 bis 21, **dadurch gekennzeichnet, dass** das feuerfeste Bauteil und die Beschichtung einmal auf eine Temperatur T₁ erwärmt werden, die größer oder gleich der Liquidustemperatur T_{L} der Edelmetall-Legierung ist, und dass das feuerfeste Bauteil und die Beschichtung ein zweites Mal auf eine Temperatur T₂ erwärmt werden, die oberhalb der Temperatur T₁ gewählt wird.

23. Verfahren nach Anspruch 22, **dadurch gekennzeichnet, dass** die Temperatur T₁ kleiner 1400°C gewählt wird und dass die Temperatur T₂ größer 1400°C gewählt wird.

24. Verfahren nach einem der Ansprüche 22 bis 23, **dadurch gekennzeichnet, dass** die Temperatur T₂ so lange gehalten wird, bis der Anteil an oxidierbarer Substanz in der Beschichtung < 0,01 at % beträgt.

25. Verfahren nach Anspruch 23, **dadurch gekennzeichnet, dass** die Temperatur T₂ so lange gehalten wird, bis der Anteil an oxidierbarer Substanz in der Beschichtung < 0,005 at % beträgt.

26. Verfahren nach einem der Ansprüche 1 bis 25, **dadurch gekennzeichnet, dass** das feuerfeste Bauteil mit dem Pulver in einer Dicke beschichtet wird, dass nach dem Erwärmen eine Schichtdicke von 50 bis 500µm vorliegt.

27. Verfahren nach einem der Ansprüche 1 bis 26, **dadurch gekennzeichnet, dass** das feuerfeste Bauteil mit der Beschichtung vollständig bedeckt wird.

28. Verfahren nach einem der Ansprüche 1 bis 26, **dadurch gekennzeichnet, dass** das feuerfeste Bauteil mit der Beschichtung teilweise bedeckt wird.

29. Verfahren nach einem der Ansprüche 1 bis 28, **dadurch gekennzeichnet, dass** die Sauerstoff-enthaltende Atmosphäre aus Luft oder Sauerstoff gebildet wird.

30. Verfahren nach einem der Ansprüche 1 bis 29, **dadurch gekennzeichnet, dass** die Beschichtung nach dem Abkühlen galvanisch beschichtet wird.

## Claims

1. Process for the production of a coating on a refractory component, a noble metal alloy being applied as a coating material to the refractory component, the noble metal of the noble metal alloy having a melting point greater than 1400°C and comprising platinum and/or iridium and/or rhodium and/or ruthenium and/or gold, the noble metal alloy being used in the form of a powder and the refractory component being coated with the powder, **characterized in that** the noble metal alloy has a liquidus temperature T_{L} in the range from 900°C to 1400°C, that the noble metal alloy has a noble metal fraction in the range from ≥ 84 to ≤ 99.5% by weight and a fraction of an oxidizable substance in the range from ≥ 0.5 to ≤ 16% by weight, the oxidizable substance comprising boron and/or phosphorus and/or antimony and/or arsenic, that
- the refractory component and the coating are heated in an oxygen-containing atmosphere at least once to a temperature T which is greater than or equal to the liquidus temperature T_{L} of the noble metal alloy, that
- the oxidizable substance is oxidized thereby and a resulting oxide is at least partly vaporized, and that
- the temperature T is maintained until the fraction of oxidizable substance in the coating is < 0.1 atom % and the coated refractory component is then cooled.

2. Process according to Claim 1, **characterized in that** the noble metal comprises ≥ 70% by weight of platinum and ≤ 30% by weight of gold and/or iridium and/or rhodium.

3. Process according to either of Claims 1 and 2, **characterized in that** the refractory component comprises a ceramic or a metal.

4. Process according to Claim 3, **characterized in that** the ceramic comprises Al₂O₃ and/or SiO₂ and/or ZrO₂ and/or zirconium silicate and/or aluminium silicate.

5. Process according to Claim 3, **characterized in that** the metal comprises molybdenum and/or iron and/or nickel and/or cobalt.

6. Process according to Claim 5, **characterized in that** the metal comprises iron and/or nickel and/or cobalt and from 15 to 30% by weight of aluminium and/or chromium.

7. Process according to Claim 6, **characterized in that** the metal additionally contains from 0.01 to 0.3% by weight of hafnium and/or yttrium and/or lanthanum and/or cerium or oxidic compounds thereof.

8. Process according to any of Claims 5 to 7, **characterized in that** the metal has a ceramic coating.

9. Process according to any of Claims 1 to 8, **characterized in that** the powder is used with a maximum particle size of 150 µm.

10. Process according to Claim 9, **characterized in that** the maximum particle size is 50 µm.

11. Process according to any of Claims 1 to 10, **characterized in that** the liquidus temperature T_{L} is chosen in the range from 1100°C to 1300°C.

12. Process according to any of Claims 1 to 11, **characterized in that** the refractory component is coated with the powder by dusting on the powder or applying it in the form of a suspension.

13. Process according to Claim 12, **characterized in that** the refractory component is coated by immersion in the suspension or by spraying or brushing or printing with the suspension.

14. Process according to any of Claims 1 to 13, **characterized in that** the noble metal alloy comprises the noble metal platinum and the oxidizable substance boron.

15. Process according to Claim 14, **characterized in that** the noble metal alloy comprises boron in a range from 0.5 to 2% by weight.

16. Process according to any of Claims 1 to 13, **characterized in that** the noble metal alloy comprises the noble metal platinum and the oxidizable substance phosphorus.

17. Process according to Claim 16, **characterized in that** the noble metal alloy comprises phosphorus in a range from 2 to 3.5% by weight.

18. Process according to any of Claims 1 to 13, **characterized in that** the noble metal alloy comprises the noble metal platinum and the oxidizable substance antimony.

19. Process according to Claim 18, **characterized in that** the noble metal alloy comprises antimony in a range from 8 to 16% by weight.

20. Process according to any of Claims 1 to 13, **characterized in that** the noble metal alloy comprises the noble metal platinum and the oxidizable substance arsenic.

21. Process according to Claim 20, **characterized in that** the noble metal alloy comprises arsenic in a range from 5 to 10% by weight.

22. Process according to any of Claims 1 to 21, **characterized in that** the refractory component and the coating are heated once to a temperature T₁ which is greater than or equal to the liquidus temperature T_{L} of the noble metal alloy, and that the refractory component and the coating are heated a second time to a temperature T₂ which is chosen to be above the temperature T₁.

23. Process according to Claim 22, **characterized in that** the temperature T₁ is chosen to be less than 1400°C and that the temperature T₂ is chosen to be greater than 1400°C.

24. Process according to either of Claims 22 and 23, **characterized in that** the temperature T₂ is maintained until the fraction of oxidizable substance in the coating is < 0.01 atom %.

25. Process according to Claim 23, **characterized in that** the temperature T₂ is maintained until the fraction of oxidizable substance in the coating is < 0.005 atom %.

26. Process according to any of Claims 1 to 25, **characterized in that** the refractory component is coated with the powder in a thickness such that a layer thickness of from 50 to 500 µm is present after heating.

27. Process according to any of Claims 1 to 26, **characterized in that** the refractory component is completely covered by the coating.

28. Process according to any of Claims 1 to 26, **characterized in that** the refractory component is partly covered by the coating.

29. Process according to any of Claims 1 to 28, **characterized in that** the oxygen-containing atmosphere comprises air or oxygen.

30. Process according to any of Claims 1 to 29, **characterized in that** the coating is electroplated after cooling.

## Revendications

1. Procédé de production d'un revêtement sur une pièce réfractaire, où un alliage de métal noble est appliqué comme matériau de revêtement sur la pièce réfractaire, où le métal noble de l'alliage de métal noble présente une température de fusion supérieure à 1400°C et est formé par du platine et/ou de l'iridium et/ou du rhodium et/ou du ruthénium et/ou de l'or, où l'alliage de métal noble est utilisé sous forme de poudre et la pièce réfractaire est revêtue de la poudre, **caractérisé en ce que** l'alliage de métal noble présente une température de liquidus T_{L} dans le domaine de 900°C à 1400°C, **en ce que** l'alliage de métal noble présente une proportion de métal noble dans le domaine de ≥ 84 à ≤ 99,5 % en masse et une proportion d'une substance oxydable dans le domaine de ≥ 0,5 à ≤ 16 % en masse, où la substance oxydable est formée par du bore et/ou du phosphore et/ou de l'antimoine et/ou de l'arsenic, **en ce que**
- la pièce réfractaire et le revêtement sont chauffés dans une atmosphère contenant de l'oxygène au moins une fois à une température T qui est supérieure ou égale à la température de liquidus T_{L} de l'alliage de métal noble, **en ce que**
- la substance oxydable est alors oxydée et un oxyde formé est évaporé au moins partiellement, et **en ce que**
- la température T est maintenue jusqu'à ce que la proportion de substance oxydable dans le revêtement soit inférieure à 0,1 at % et la pièce réfractaire revêtue est ensuite refroidie.

2. Procédé selon la revendication 1, **caractérisé en ce que** le métal noble est formé à partir de ≥ 70 % en masse de platine et ≤ 30 % en masse d'or et/ou d'iridium et/ou de rhodium.

3. Procédé selon l'une des revendications 1 à 2, **caractérisé en ce que** la pièce réfractaire est formée par une céramique ou un métal.

4. Procédé selon la revendication 3, **caractérisé en ce que** la céramique est formée à partir de Al₂O₃ et/ou de SiO₂ et/ou ZrO₂ et/ou de silicate de zirconium et/ou de silicate d'aluminium.

5. Procédé selon la revendication 3, **caractérisé en ce que** le métal est formé par du molybdène et/ou du fer et/ou du nickel et/ou du cobalt.

6. Procédé selon la revendication 5, **caractérisé en ce que** le métal est formé par du fer et/ou du nickel et/ou du cobalt et par 15 à 30 % en masse d'aluminium et/ou de chrome.

7. Procédé selon la revendication 6, **caractérisé en ce que** le métal contient en outre 0,01 à 0,3 % en masse de hafnium et/ou d'yttrium et/ou de lanthane et/ou de cérium ou de composés oxydiques de ceux-ci.

8. Procédé selon l'une des revendications 5 à 7, **caractérisé en ce que** le métal comporte un revêtement de céramique.

9. Procédé selon l'une des revendications 1 à 8, **caractérisé en ce que** la poudre est utilisée avec une taille de grain maximale de 150 µm.

10. Procédé selon la revendication 9, **caractérisé en ce que** la taille de grain maximale est 50 µm.

11. Procédé selon l'une des revendications 1 à 10, **caractérisé en ce que** la température de liquidus T_{L} est choisie dans le domaine de 1100°C à 1300°C.

12. Procédé selon l'une des revendications 1 à 11, **caractérisé en ce que** la pièce réfractaire est revêtue de la poudre par le fait que la poudre est saupoudrée ou appliquée sous forme d'une suspension.

13. Procédé selon la revendication 12, **caractérisé en ce que** la pièce réfractaire est revêtue de la suspension par immersion dans la suspension ou par pulvérisation ou application à la brosse ou impression.

14. Procédé selon l'une des revendications 1 à 13, **caractérisé en ce que** l'alliage de métal noble est formé à partir du métal noble platine et de la substance oxydable bore.

15. Procédé selon la revendication 14, **caractérisé en ce que** l'alliage de métal noble est formé avec le bore dans un domaine de 0,5 à 2 % en masse.

16. Procédé selon l'une des revendications 1 à 13, **caractérisé en ce que** l'alliage de métal noble est formé à partir du métal noble platine et de la substance oxydable phosphore.

17. Procédé selon la revendication 16, **caractérisé en ce que** l'alliage de métal noble est formé avec le phosphore dans un domaine de 2 à 3,5 % en masse.

18. Procédé selon l'une des revendications 1 à 13, **caractérisé en ce que** l'alliage de métal noble est formé à partir du métal noble platine et de la substance oxydable antimoine.

19. Procédé selon la revendication 18, **caractérisé en ce que** l'alliage de métal noble est formé avec l'antimoine dans un domaine de 8 à 16 % en masse.

20. Procédé selon l'une des revendications 1 à 13, **caractérisé en ce que** l'alliage de métal noble est formé à partir du métal noble platine et de la substance oxydable arsenic.

21. Procédé selon la revendication 20, **caractérisé en ce que** l'alliage de métal noble est formé avec l'arsenic dans un domaine de 5 à 10 % en masse.

22. Procédé selon l'une des revendications 1 à 21, **caractérisé en ce que** la pièce réfractaire et le revêtement sont chauffés une fois à une température T₁ qui est supérieure ou égale à la température de liquidus T_{L} de l'alliage de métal noble et **en ce que** la pièce réfractaire et le revêtement sont chauffés une seconde fois à une température T₂ qui est supérieure à la température T₁.

23. Procédé selon la revendication 22, **caractérisé en ce que** la température T₁ est choisie inférieure à 1400°C et **en ce que** la température T₂ est choisie supérieure à 1400°C.

24. Procédé selon l'une des revendications 22 à 23, **caractérisé en ce que** la température T₂ est maintenue jusqu'à ce que la proportion de substance oxydable dans le revêtement soit inférieure à 0,01 at %.

25. Procédé selon la revendication 23, **caractérisé en ce que** la température T₂ est maintenue jusqu'à ce que la proportion de substance oxydable dans le revêtement soit inférieure à 0,005 at %.

26. Procédé selon l'une des revendications 1 à 25, **caractérisé en ce que** la pièce réfractaire est revêtue de la poudre en une épaisseur telle qu'il en résulte après le chauffage une épaisseur de couche de 50 à 500 µm.

27. Procédé selon l'une des revendications 1 à 26, **caractérisé en ce que** la pièce réfractaire est recouverte totalement par le revêtement.

28. Procédé selon l'une des revendications 1 à 26, **caractérisé en ce que** la pièce réfractaire est recouverte partiellement par le revêtement.

29. Procédé selon l'une des revendications 1 à 28, **caractérisé en ce que** l'atmosphère contenant de l'oxygène est formée par de l'air ou de l'oxygène.

30. Procédé selon l'une des revendications 1 à 29, **caractérisé en ce que** le revêtement est revêtu par galvanisation après le refroidissement.
